# EUROPEAN PATENT APPLICATION

(11) **EP 4 598 256 A1**
(43) Date of publication of application: **06.08.2025**
(21) Application number: 23872904.0
(22) Date of filing: 18.09.2023
(51) Int. Cl.: H04W 76/18, H04W 24/08, H04W 76/14, H04W 76/22, H04W 40/24, H04W 88/04, H04W 92/18

(54) **METHOD FOR PROCESSING COMMUNICATION BY USING PLURALITY OF PATHS, AND DEVICE THEREFOR**

(30) Priority: 28.09.2022 KR 20220123587; 12.09.2023 KR 20230121265
(71) Applicant: KT Corporation, Seongnam-si, Gyeonggi-do 13606 (KR)
(72) Inventor: HONG, Sung Pyo, Seongnam-si Gyeonggi-do 13606 (KR)
(74) Representative: Brevalex
(86) International application number: PCT/KR2023/014035
(87) International publication number: WO 2024/071786

(57) **Abstract**

Provide are a method and device for performing communication through multiple paths including a direct path and an indirect path. The method of UE may include receiving configuration information for configuring multiple paths including a direct path and an indirect path from a base station, configuring the multiple paths by applying the configuration information, and upon detecting a radio link failure in at least one of the multiple paths, transmitting an radio resource control (RRC) message.

## Description

### Technical Field

The disclosure relates to technology in which a remote UE, connected to a base station through a relay UE, transmits and receives data through both a direct path and an indirect path.

### Background Art

Sidelink communication, which may be used for vehicle-to-vehicle communication, is being discussed and developed in 3GPP. Sidelink (SL) refers to a communication scheme that establishes a direct link between user equipments (UEs) to directly exchange voice or data, or other types of information between UEs without passing through a base station (BS). SL is being considered as a solution to reduce the burden on base stations due to rapidly increasing data traffic.

Meanwhile, wireless communication technology includes relay technology that provides an additional hop during the process in which the UE connects to the base station. Typically, relay technology has been applied between the UE and the base station, and research is ongoing to apply relay technology to sidelink communications.

Sidelink relay may support a UE-to-network (U2N) relay function that provides connectivity to a U2N remote UE. Both L2 and L3 U2N relay structures may be supported. A U2N relay UE should be in an RRC connected state to perform relaying of unicast data.

In the related art, for an L2 U2N remote UE in RRC idle/inactive state, a cell selection/reselection procedure and a relay selection/reselection procedure may operate independently. If suitable cells and suitable U2N relay UEs are available, the selection of one cell or one U2N relay UE is up to the UE implementation. Accordingly, data transmission by the U2N remote UE may be performed by selecting one of the following: i) an RRC/SRB/DRB connection through a direct path (Direct Path, a type of UE-to-Network transmission path, where data is transmitted between a UE and the network without sidelink relaying.) through a Uu wireless interface with the base station in a corresponding cell and ii) an RRC/SRB/DRB connection through an indirect path (Indirect Path, a type of UE-to-Network transmission path, where data is forwarded via a U2N Relay UE between a U2N Remote UE and the network.) through a corresponding U2N relay UE.

Therefore, wireless reliability and throughput may be reduced compared to when a plurality of transmission paths are used.

### Detailed Description of the Invention

### Technical Problem

In the foregoing background, the disclosure provides a technology in which a remote UE, connected to a base station through a relay UE, transmits and receives data through both a direct path and an indirect path.

### Technical Solution

In accordance with an embodiment, a method of remote UE may be provided for performing communication through a plurality of paths. The method may include receiving configuration information for configuring a plurality of paths including a direct path and an indirect path from a base station, configuring the plurality of paths by applying the configuration information, and upon detecting a radio link failure in at least one of the plurality of paths, transmitting an RRC message.

In accordance with another embodiment, a method of a base station may be provided for controlling communication through a plurality of paths of a remote UE. The method may include transmitting an RRC reconfiguration message for configuring an indirect path to a relay UE providing a connection with the remote UE, transmitting configuration information for configuring a plurality of paths including a direct path and the indirect path in the remote UE to the relay UE, and upon detecting a radio link failure in at least one of the plurality of paths in the remote UE, receiving an RRC message.

In accordance with another embodiment, a remote UE may be provided for performing communication through a plurality of paths. The remote UE may include a receiver receiving configuration information for configuring a plurality of paths including a direct path and an indirect path from a base station, a controller configuring the plurality of paths by applying the configuration information, and a transmitter, upon detecting a radio link failure in at least one of the plurality of paths, transmitting an RRC message.

In accordance with another embodiment, a base station may be provided for controlling communication through a plurality of paths of a remote UE, comprising a transmitter transmitting an RRC reconfiguration message for configuring an indirect path to a relay UE providing a connection with the remote UE and transmitting configuration information for configuring a plurality of paths including a direct path and the indirect path in the remote UE to the relay UE, and a receiver, upon detecting a radio link failure in at least one of the plurality of paths in the remote UE, receiving an RRC message.

### Advantageous Effects

According to embodiments, a remote UE connected to a base station through a relay UE is enabled to transmit and receive data through both a direct path and an indirect path.

### Brief Description of Drawings

FIG. 1 is a view schematically illustrating a structure for an NR wireless communication system.
FIG. 2 is a view illustrating a frame structure in an NR system.
FIG. 3 is a view illustrating a resource grid supported by radio access technology.
FIG. 4 is a view illustrating a bandwidth part supported by radio access technology.
FIG. 5 is a view exemplarily illustrating a synchronization signal block in radio access technology.
FIG. 6 is a view illustrating a random access procedure in radio access technology.
FIG. 7 is a view illustrating a CORESET.
FIG. 8 is a view illustrating a control plane protocol structure for an L2 UE-to-network (U2N) relay according to an embodiment.
FIG. 9 is a flowchart illustrating operations of a remote UE according to an embodiment.
FIG. 10 is a flowchart for describing operations of a base station according to an embodiment.
FIG. 11 is a view illustrating an example of a split radio bearer/SRB/DRB configuration through a plurality of paths.
FIG. 12 is a block diagram illustrating a remote UE according to an embodiment.
FIG. 13 is a block diagram illustrating a base station according to an embodiment.

### Mode for Carrying out the Invention

Hereinafter, embodiments of the disclosure will be described in detail with reference to the accompanying drawings. In assigning reference numerals to components of each drawing, the same components may be assigned the same numerals even when they are shown on different drawings. When it is determined that including the subject matter of the disclosure would render it unclear, the detailed description of the known art or functions may be skipped. The terms "comprises" and/or "comprising," "has" and/or "having," or "includes" and/or "including" when used in this specification are intended to specify the presence of stated features, regions, integers, steps, operations, elements, components and/or group thereof, but do not preclude the presence or addition of one or more other features, regions, integers, steps, operations, elements, components, and/or groups thereof. As used herein, the singular forms "a", "an" and "the" are intended to include the plural forms as well, unless the context explicitly indicates otherwise.

Such terms as "first," "second," "A," "B," "(a)," and "(b)," may be used in describing the components of the present invention. These terms are provided merely to distinguish one component from another, and the essence, order, or number of the components are not limited by these terms.

In describing the positional relationship between components, when two or more components are described as being "connected", "coupled" or "linked", the two or more components may be directly "connected", "coupled" or "linked" ", or an intermediate component may be present. In this context, the intermediate component may be included in one or more of the two or more components that are "connected", "coupled" or "linked" to each other.

When such terms as, "after", "next to", "before", and similar expressions are used to describe the temporal flow relationship related to components, operation methods, and fabricating methods, they may include a non-continuous relationship unless the term "immediately" or "directly" is used.

When a component is designated by a value or its corresponding information (e.g., level), the value or the corresponding information may be interpreted as including a tolerance resulting from various factors (e.g., process factors, internal or external impacts, or noise).

In the disclosure, a 'wireless communication system' means a system that provides various communication services, such as voice and data packets, using a radio resource and may include a UE, a base station, or a core network.

The present embodiments disclosed below may be applied to wireless communication systems that utilize various radio access technologies. For example, the present embodiments may be applied to various radio access technologies, such as code division multiple access (CDMA), frequency division multiple access (FDMA), time division multiple access (TDMA), orthogonal frequency division multiple access (OFDMA), single carrier frequency division multiple access (SC-FDMA), or non-orthogonal multiple access (NOMA). Further, radio access technology may mean not only a specific access technology, but also a communication technology for each generation established by various communication organizations, such as 3GPP (3^{rd} generation partnership project), 3GPP2, Wi-Fi, Bluetooth, IEEE (institute of electrical and electronic engineers), and ITU (International telecommunication union). For example, CDMA may be implemented as radio technology, such as universal terrestrial radio access (UTRA) or CDMA2000. TDMA may be implemented as GSM (global system for mobile communications)/GPRS (general packet radio service)/EDGE (enhanced data rates for GSM evolution). OFDMA may be implemented with a wireless technology, such as institute of electrical and electronic engineers (IEEE) 802.11 (Wi-Fi), IEEE 802.16 (WiMAX), IEEE 802-20, evolved UTRA (E-UTRA), and the like. IEEE 802.16m is an evolution of IEEE 802.16e and provides backward compatibility with IEEE 802.16e-based systems. UTRA is part of UMTS (universal mobile telecommunications system). 3GPP (3rd generation partnership project) LTE(long term evolution) is part of E-UMTS (evolved UMTS) using evolved-UMTS terrestrial radio access (E-UTRA) and adopts OFDMA for downlink and SC-FDMA for uplink. As such, the present embodiments may be applied to currently disclosed or commercialized radio access technologies and may also be applied to radio access technologies currently under development or to be developed in the future.

Meanwhile, in the disclosure, 'UE' is a comprehensive concept meaning a device including a wireless communication module that communicates with a base station in a wireless communication system and should be interpreted as a concept that may include not only user equipment (UE) in, e.g., WCDMA, LTE, NR, HSPA, and IMT-2020 (5G or new radio), but also a mobile station (MS), user terminal (UT), subscriber station (SS), or wireless device in GSM. Further, the UE may be a user portable device, such as a smartphone, according to the usage type and, in the V2X communication system, the UE may mean a vehicle or a device including a wireless communication module in the vehicle. Further, in the case of a machine type communication system, the UE may mean an machine type communication (MTC) terminal, machine-to-machine (M2M) terminal, or ultra reliable low latency communication (URLLC) terminal equipped with a communication module to perform machine type communication.

In the disclosure, 'base station' or 'cell' refers to a terminal that communicates with a UE in terms of a network and in concept encompasses various coverage areas, such as node-B, evolved node-B (eNB), gNode-B (gNB), low power node (LPN), sector, site, various types of antennas, base transceiver system (BTS), access point, point (e.g. transmission point, reception point, or transmission/reception point), relay node, mega cell, macro cell, micro cell, pico cell, femto cell, remote radio head (RRH), radio unit (RU), or small cell. Further, 'cell' may mean one including a bandwidth part (BWP) in the frequency domain. For example, 'serving cell' may mean the activation BWP of the UE.

Since there is a base station controlling one or more cells in the various cells enumerated above, the base station may be interpreted in two meanings. The base station may be 1) a device itself which provides a mega cell, a macro cell, a micro cell, a pico cell, a femto cell, or a small cell in relation to the radio region, or 2) the radio region itself. In 1), all devices that provide a predetermined radio region and are controlled by the same entity or interact to configure a radio region via cooperation are denoted as base stations. An embodiment of the base station is a transmission/reception point, transmission point, or reception point depending on the scheme of configuring the radio region. In 2), the radio region itself, in which a signal is received or transmitted from the point of view of the UE or a neighboring base station may be the base station.

In the disclosure, 'cell' may mean the coverage of the signal transmitted from the transmission/reception point, a component carrier having the coverage of the signal transmitted from the transmission/reception point (transmission point or transmission/reception point), or the transmission/reception point itself.

Uplink (UL) means a scheme for transmitting data from the UE to the base station or for receiving data at the UE from the base station, and downlink (DL) means a scheme for transmitting data from the base station to the UE and/or receiving data from the UE at the base station. Downlink may mean communication or a communication path from the multiple transmission/transmission points to the UE, and uplink may mean communication or a communication path from the UE to multiple transmission/reception points. In this case, in the downlink, the transmitter may be part of the multiple transmission/reception points, and the receiver may be part of the UE. Further, in the uplink, the transmitter may be part of the UE, and the receiver may be part of the multiple transmission/reception points.

Uplink and downlink configure a control channel, such as physical downlink control channel (PDCCH) or physical uplink control channel (PUCCH) and transmits and receives control information through the control channel. Uplink and downlink configure a data channel, such as physical downlink shared channel (PDSCH) or physical uplink shared channel (PUSCH) to transmit and receive data. Hereinafter, the context in which signals are transmitted or received through a channel, such as PUCCH, PUSCH, PDCCH, and PDSCH, is expressed as 'transmitting or receiving PUCCH, PUSCH, PDCCH, and PDSCH.'

Although the technical spirit is described with a primary focus on the 3GPP LTE/LTE-A/new RAT (NR) communication system for clarity of description, the technical features are not limited to this communication system.

The 3GPP develops 5th-generation (5G) communication technology to meet the requirements of the ITU-R's next-generation radio access technology following its research on 4th-generation (4G) communication technology. Specifically, the 3GPP develops new NR communication technology separate from LTE-A pro and 4G communication technology, which have enhanced LTE-advanced technology to meet the requirements of ITU-R, as 5G communication technology. Both LTE-A pro and NR refer to 5G communication technologies. Hereinafter, 5G communication technology will be described focusing on NR unless specified as a specific communication technology.

Operating scenarios in NR define various operating scenarios by adding considerations for satellites, automobiles, and new verticals in the existing 4G LTE scenarios. From a service point of view, NR supports i) the enhanced mobile broadband (eMBB) scenario, ii) the massive machine communication (mMTC) scenario characterized by high UE density, wide deployment, low data rates, and asynchronous access, and iii) the ultra reliability and low latency (URLLC) scenario, which requires high reliability and also supports high-speed mobility.

To meet such scenarios, NR introduces wireless communication systems that adopt new waveform and frame structure technologies, low-latency technologies, ultra-high frequency band (mmWave) support technologies, and forward compatibility providing technologies. In particular, the NR system suggests various technical changes focused on flexibility to provide forward compatibility. The main technical features of NR will be described below with reference to the drawings.

### <Overview of NR system>

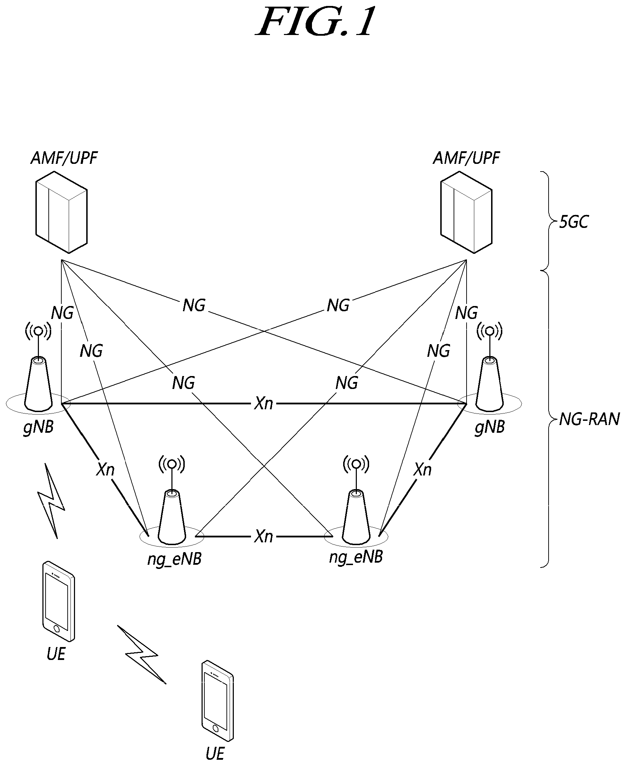

FIG. 1 is a view schematically illustrating a structure for an NR system.

Referring to FIG. 1, the NR system is divided into a 5G core network (5GC) and an NR-RAN part. The next generation radio access network (NG-RAN) includes gNB and ng-eNBs which provide user plane (SDAP/PDCP/RLC/MAC/PHY) and user equipment (UE) control plane (RRC) protocol termination. The gNBs or the gNBs and the ng-eNBs are interconnected through the Xn interface. The gNB and the ng-eNB are connected to the 5G core network (5GC) through the NG interface. The 5GC may include i) an access and mobility management function (AMF), which is in charge of the control plane, including UE access and mobility control function, and ii) a user plane function (UPF), which handles user data control function. NR supports both the below-6GHz frequency band (Frequency Range 1 (FR1) and the above-6GHz frequency band (Frequency Range 2 (FR2)).

The gNB means a base station that provides the UE with NR user plane and control plane protocol termination, and the ng-eNB means a base station that provides the UE with E-UTRA user plane and control plane protocol termination. In this disclosure, the base station should be understood as encompassing both gNB and ng-eNB and, when necessary, may be used to separately denote gNB or ng-eNB.

### <NR waveform, numerology, and frame structure>

NR uses the CP-OFDM waveform with a cyclic prefix for downlink transmission and either CP-OFDM or DFT-s-OFDM for uplink transmission. The OFDM technology is easily integrated with multiple input multiple output (MIMO) and offers the advantages, such as high frequency efficiency and the ability to use a low-complexity receiver.

Meanwhile, since the above-described three scenarios in NR have different requirements for data rate, latency, and coverage, it is necessary to efficiently meet the requirements of each scenario through the frequency band constituting any NR system. To achieve this, technology has been proposed for efficiently multiplexing radio resources based on a plurality of different numerologies.

Specifically, the NR transmission numerology is determined based on subcarrier spacing and cyclic prefix (CP). As shown in Table 1 below, it changes exponentially, with the exponent value of 2 used as µ relative to 15kHz.

**[Table 1]**

| µ | subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

As shown in Table 1 above, the NR numerologies may be divided into five types depending on subcarrier spacing. This is different from the fixed subcarrier spacing of 15kHz in LTE, which is a 4G communication technology. Specifically, in NR, the subcarrier spacings used for data transmission are 15, 30, 60, and 120 kHz, and the subcarrier spacings used for synchronization signal transmission are 15, 30, 120, and 240 kHz. Further, the extended CP is applied only to the 60kHz subcarrier spacing. Meanwhile, as part of the frame structure in NR, a frame with a length of 10ms, constituted of 10 subframes of equal length (1ms each), is defined. Each frame may be divided into two half frames of 5 ms, and each half frame may include 5 subframes. For the 15kHz subcarrier spacing, one subframe is constituted of one slot, and each slot is constituted of 14 OFDM symbols.

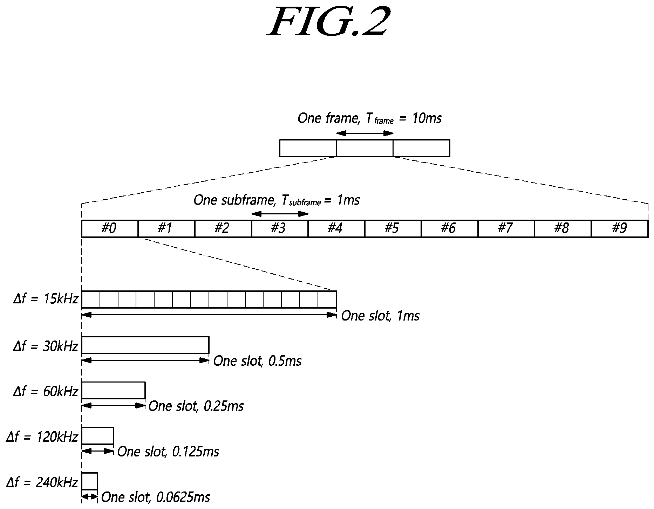

FIG. 2 is a view illustrating a frame structure in an NR system.

Referring to FIG. 2, a slot is fixedly composed of 14 OFDM symbols in the case of the normal CP, but the length of the slot in the time domain may vary depending on the subcarrier spacing. For example, for a numerology with a 15kHz subcarrier spacing, a slot has the same length as the subframe, as the length of 1ms. In contrast, for a numerology with a 30 kHz subcarrier spacing, a slot is constituted of 14 OFDM symbols, but two slots may be included in one subframe, as the length of 0.5ms. In other words, the subframe and the frame are defined as having a fixed length, and the slot is defined with the number of symbols, and the temporal length may vary depending on the subcarrier spacing.

Meanwhile, NR defines a slot as the basic unit for scheduling and, to reduce transmission latency in the radio section, adopts minislot (or also referred to as subslot or non-slot based schedule). When a wide subcarrier spacing is used, the length of one slot is inversely proportional to the subcarrier spacing, allowing for reduced transmission latency in the radio section. The minislot is designed for efficient support of the URLLC scenario and enables scheduling in units of 2, 4, or 7 symbols.

Further, NR defines uplink and downlink resource allocation as the symbol level within one slot, unlike LTE. To reduce HARQ latency, a slot structure has been introduced that enables HARQ ACK/NACK to be transmitted directly within the transmission slot. This slot structure is referred to as a self-contained structure in the description.

NR is designed to support a total of 256 slots of which 62 slot formats are used in 3GPP Rel-15. Additionally, a common frame structure for FDD or TDD frame is supported through a combination of various slots. For example, NR supports i) a slot structure where all symbols in the slot are configured as downlink, ii) a slot structure where all symbols are configured as uplink, and iii) a slot structure where downlink symbols and uplink symbols are combined. Further, NR supports data transmission that is distributed across and scheduled in one or more slots. Accordingly, the base station may inform the UE whether a given slot is a downlink slot, uplink slot, or flexible slot using the slot format indicator (SFI). The base station may indicate the slot format by indicating (e.g., providing) the index of the table configured through UE-specific RRC signaling via the SFI and may indicate it dynamically through downlink control information (DCI) or statically or semi-statically through RRC.

### <NR physical resource>

In relation to the physical resource in NR, factors such as antenna port, resource grid, resource element, resource block, and bandwidth part are taken into consideration.

An antenna port is defined so that the channel carried by a symbol on an antenna port may be inferred from the channel carried by another symbol on the same antenna port. When the large-scale property of the channel carrying a symbol on one antenna port may be inferred from the channel carrying a symbol on a different antenna port, the two antenna ports may be considered to have a QC/QCL (quasi co-located or quasi co-location) relationship. Here, the large-scale properties include one or more of delay spread, Doppler spread, frequency shift, average received power, and received timing.

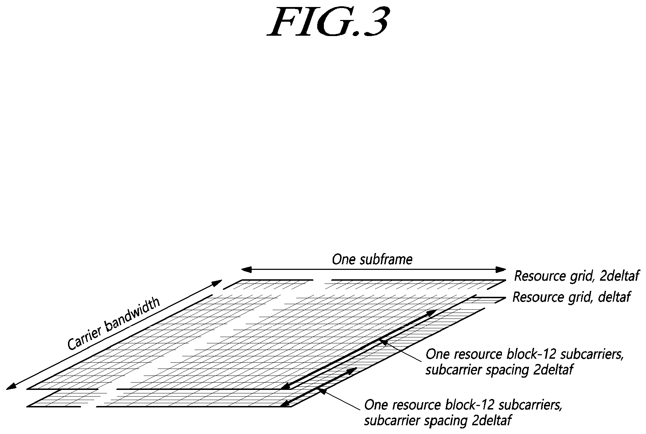

FIG. 3 is a view illustrating a resource grid supported by radio access technology.

Referring to FIG. 3, since NR supports a plurality of numerologies on the same carrier, a resource grid may be defined for each numerology. Furthermore, the resource grid may also vary depending on the antenna port, subcarrier spacing, or transmission direction.

The resource block is constituted of12 subcarriers and is defined only in the frequency domain. Further, the resource element is constituted of one OFDM symbol and one subcarrier. Therefore, as shown in FIG. 3, the size of one resource block may vary depending on the subcarrier spacing. Further, in NR, "point A", which serves as a common reference point for the resource block grid, and common resource block and virtual resource block is defined.

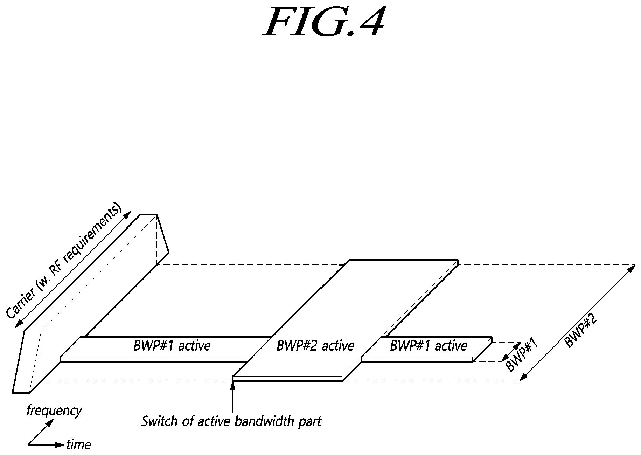

FIG. 4 is a view illustrating a bandwidth part supported by radio access technology.

In NR, unlike LTE where the carrier bandwidth is fixed at 20Mhz, the maximum carrier bandwidth ranges from 50Mhz to 400Mhz, depending on the subcarrier spacing. Therefore, it is not assumed that all UEs utilize all available carrier bandwidths. Accordingly, in NR, as shown in FIG. 4, a bandwidth part (BWP) may be designated within the carrier bandwidth and allocated for use by the UE. Further, the bandwidth part is associated with one numerology is composed of a subset of contiguous common resource blocks and may be activated dynamically over time. Up to four bandwidth parts (BWPs) may be configured in the UE for each of uplink and downlink. Data is transmitted/received using the bandwidth part (BWP) activated at a given time.

For paired spectra, the uplink and downlink bandwidth parts are configured independently, while for unpaired spectra, the bandwidth parts of uplink and downlink are paired to share the center frequency, thereby preventing unnecessary frequency re-tunning between downlink and uplink operations.

### <NR initial access>

In NR, the UE performs a cell search and random access procedure to connect to the base station and perform communication.

Cell search is a procedure where the UE synchronizes with the cell of the base station using the synchronization signal block (SSB) transmitted by the base station, retrieves the physical layer cell ID, and acquires system information.

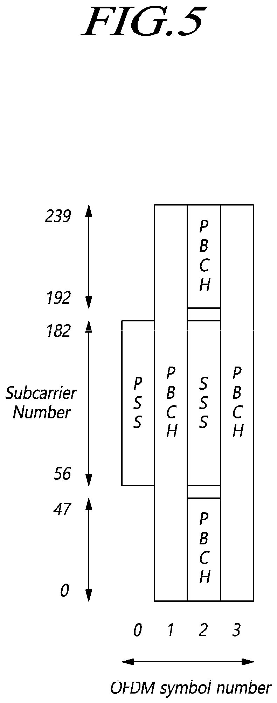

FIG. 5 is a view exemplarily illustrating a synchronization signal block in radio access technology.

Referring to FIG. 5, the SSB is constituted of a primary synchronization signal (PSS) and a secondary synchronization signal (SSS), each occupying 1 symbol and 127 subcarriers, respectively, along with a PBCH spanning 3 OFDM symbols and 240 subcarriers.

The UE monitors the SSB in time and frequency domains and receives the SSB.

The SSB may be transmitted up to 64 times within 5 ms. Multiple SSBs are transmitted using different transmission beams during 5 ms time, and the UE performs detection assuming that SSBs are transmitted every 20ms period based on a specific beam used for transmission. The number of beams available for SSB transmission within 5ms may increase as the frequency band increases. For example, up to 4 SSB beams may be transmitted below 3 GHz, SSBs may be transmitted using up to 8 different beams in a frequency band of 3 to 6 GHz, and up to 64 different beams may be utilized in a frequency band of 6 GHz or higher.

Two SSBs are included in one slot, and the start symbol position and the number of repetitions within the slot are determined based on the subcarrier spacing as follows.

Meanwhile, the SSB is not transmitted at the center frequency of the carrier bandwidth unlike the SS of typical LTE. Instead, the SSB may be transmitted at locations other than the center of the system band and, in the case supporting wideband operation, multiple SSBs may be transmitted across the frequency domain. Accordingly, the UE monitors the SSB using a synchronization raster, which represents candidate frequency locations for monitoring the SSB. The carrier raster and synchronization raster, which provide center frequency location information for initial access, are newly defined in NR. Furthermore, the synchronization raster features a wider frequency interval than the carrier raster, enabling faster SSB searches by the UE.

The UE may obtain the master information block (MIB) through the PBCH of the SSB. The master information block (MIB) includes the minimum information necessary for the UE to receive remaining system information (remaining minimum system information (RMSI) broadcast by the network. Additionally, the PBCH may include information about the position of the first DM-RS symbol in the time domain, information required for the UE to monitor SIB1 (e.g., SIB1 numerology information, information related to SIB1 CORESET, search space information, PDCCH-related parameter information, etc.), offset information between the common resource block and the SSB (the absolute location of the SSB within the carrier is transmitted through SIB1), and similar information. Here, the SIB1 numerology information is equally applied to certain messages used in the random access procedure that enables the UE to access the base station after completing the cell search procedure. For example, the numerology information about SIB1 may be applied to at least one of messages 1 to 4 for the random access procedure.

The above-described RMSI may mean system information block 1 (SIB1). SIB1 is broadcast periodically (e.g., every 160 ms) in the cell. SIB1 includes information necessary for the UE to perform the initial random access procedure, and is periodically transmitted through the PDSCH. To receive SIB1, the UE must first obtain numerology information associated with SIB1 transmission and control resource set (CORESET) information used for SIB1 scheduling through the PBCH. The UE identifies scheduling information for SIB1 using SI-RNTI in CORESET and obtains SIB1 from PDSCH according to scheduling information. The remaining SIBs, other than SIB1, may be transmitted periodically or upon request by the UE.

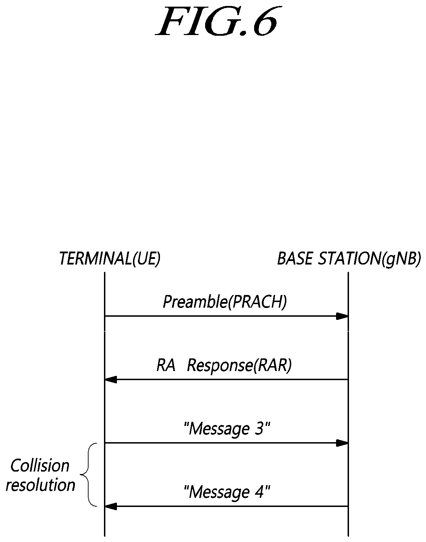

FIG. 6 is a view illustrating a random access procedure in radio access technology to which the present embodiments may apply.

Referring to FIG. 6, if the cell search is successfully completed, the UE transmits a random access preamble to initiate random access to the base station. The random access preamble is transmitted through PRACH. Specifically, the random access preamble is transmitted to the base station through the PRACH composed of contiguous radio resources within a periodically repeated specific slot. In general, when the UE initially accesses the cell, a contention-based random access procedure is performed, and when random access is performed for beam failure recovery (BFR), a non-contention-based random access procedure is performed.

The UE receives a random access response to the transmitted random access preamble. The random access response may include a random access preamble identifier (ID), uplink radio resource (UL grant), temporary cell-radio network temporary identifier (C-RNTI), and time alignment command (TAC). Since one random access response may include random access response information for multiple UEs, the random access preamble identifier may be included to indicate which UE the included UL grant, temporary C-RNTI, and TAC apply to. The random access preamble identifier may be an identifier for the random access preamble received by the base station. The TAC may be included as information for the UE to adjust uplink synchronization. The random access response may be indicated by the random access identifier on the PDCCH, specifically, the random access-radio network temporary identifier (RA-RNTI).

Upon receiving a valid random access response, the UE processes the information included in the random access response and performs scheduled transmissions to the base station. For example, the UE applies the TAC and stores the temporary C-RNTI. Further, the UE transmits data stored in its buffer or newly generated data to the base station using the UL grant. In this case, information that may identify the UE should be included.

Finally, the UE receives a downlink message for contention resolution.

### <NR CORESET>

In NR, the downlink control channel is transmitted in a control resource set (CORESET) having a length of 1 to 3 symbols and carriers uplink/downlink scheduling information, slot format index (SFI), transmit power control (TPC) information, and other related information.

As such, NR introduced the concept of CORESET to secure the flexibility of the system. The control resource set (CORESET) refers to a time-frequency resource for a downlink control signal. The UE may use one or more search spaces in CORESET time-frequency resources to decode control channel candidates. A quasi co-location (QCL) assumption for each CORESET has been defined, which is used not only to indicate the characteristics of the analog beam direction but also the latency spread, Doppler spread, Doppler shift, and average latency, all characteristics assumed by the typical QCL.

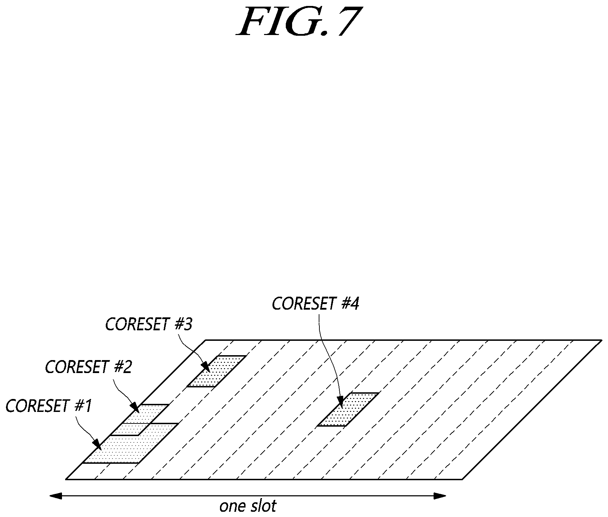

FIG. 7 is a view illustrating a CORESET.

Referring to FIG. 7, the CORESET may exist in various forms within a carrier bandwidth and within one slot. In the time domain, the CORESET may be constituted of up to 3 OFDM symbols. Further, the CORESET is defined as a multiple of 6 resource blocks up to the carrier bandwidth in the frequency domain.

The first CORESET is indicated through the MIB as part of the initial bandwidth part configuration to enable the UE to receive additional configuration and system information from the network. After establishing a connection with the base station, the UE may receive and configure one or more CORESET information through RRC signaling.

As used herein, terms such as frequency, frame, subframe, resource, resource block, region, band, subband, control channel, data channel, synchronization signal, various reference signals, various signals, and various messages related to new radio (NR) may be interpreted with various meanings as currently used or as they may be defined in the future.

### Sidelink relay

Sidelink relay has been introduced to support a UE-to-network (U2N) relay function that provides connectivity to a U2N remote UE. Both L2 and L3 U2N relay structures may be supported. A U2N relay UE should be in an RRC connected state to perform relaying of unicast data.

The following RRC state combinations are supported for L2 U2N relay operation:
- The U2N relay UE and U2N remote UE should be in an RRC connected state to transmit and receive relayed unicast data.
- The U2N relay UE may be in RRC idle, RRC inactive, or RRC connected state as long as all U2N remote UEs connected to the U2N relay UE are in RRC inactive or RRC idle state.

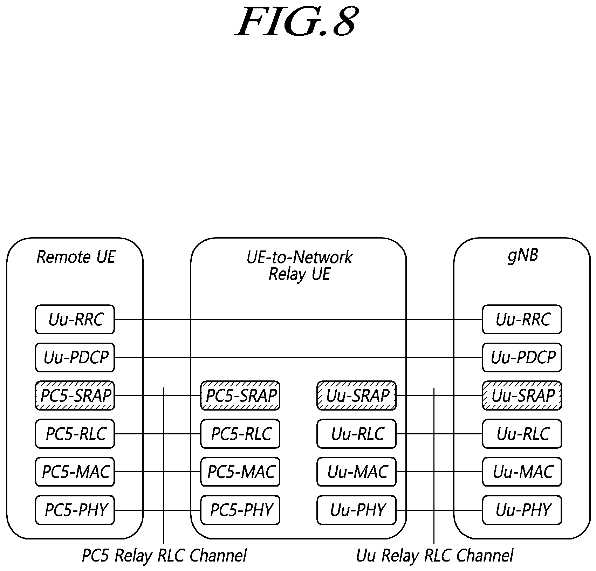

FIG. 8 is a diagram illustrating a control plane protocol structure for an L2 UE-to-network relay according to an embodiment.

Referring to FIG. 8, a remote UE may be connected to a base station through a relay UE. Between the remote UE and the relay UE, the physical, MAC, and RLC channels may be connected through a PC5 interface. The relay UE may be connected to the base station via a Uu interface. Further, the remote UE and the base station may be connected through the Uu interface at the PDCP and RRC layers.

In the related art, for an L2 U2N remote UE in the RRC idle/inactive state, a cell selection/reselection procedure and a relay selection/reselection procedure may operate independently. If suitable cells and suitable U2N relay UEs are available, to the selections of one cell or one U2N relay UE depends on the UE. Accordingly, data transmission by the U2N remote UE may be performed by selecting one the following: i) an RRC/SRB/DRB connection through a direct path (Direct Path: a type of UE-to-Network transmission path, where data is transmitted between a UE and the network without sidelink relaying.) through a Uu wireless interface with the base station in a corresponding cell and ii) RRC/SRB/DRB connection through an indirect path (Indirect Path: a type of UE-to-Network transmission path, where data is forwarded via a U2N Relay UE between a U2N Remote UE and the network.) through a corresponding U2N relay UE. Therefore, wireless reliability and throughput may be reduced compared to when a plurality of transmission paths are used. However, there is no specific method for a remote UE to simultaneously use a direct path and an indirect path.

In typical sidelink relay technology, a remote UE may select either a direct path or an indirect path to transmit and receive data, which may result in reduced throughput and wireless reliability. However, there is no specific technique for a remote UE to simultaneously use a direct path and an indirect path.

As a solution to address the above issues, the disclosure proposes a method and device for a remote UE to simultaneously transmit and receive data using simultaneously a direct path and an indirect path. Also proposed is a method for processing a radio link failure when it occurs in such a circumstance.

A 5GS/NR technology-based data transmission/reception method and radio link failure processing method are described below. However, this is for descriptive convenience, and the present embodiments may be applied to any system/radio access technology (e.g., LTE, 6G). Embodiments described in the disclosure include information elements specified in the NR/5GS standards (e.g., TS 38.321 as a MAC standard, TS 38.331 as an NR RRC standard, etc.) and the content of operations. Although the disclosure does not contain details regarding the UE operation related to the definitions of the corresponding information elements, the corresponding content set forth in the standards, which are well known art, may be incorporated or included in the present embodiments.

The following embodiments may be applied to sidelink communication between an NR UE and an NR UE through an NR/LTE base station. The following embodiments may also be applied to sidelink communication between an NR UE and an LTE UE (or any inter-RAT UE) through an NR/LTE base station. Additionally, the following embodiments may also be applied to sidelink communication between an LTE UE and an LTE UE through an NR/LTE base station. Furthermore, the following embodiments may also be applied to sidelink communication between an LTE UE and an LTE UE through an LTE base station (or any inter-RAT base station). In other words, the present embodiments may be applied regardless of sidelink communication configuration type.

Meanwhile, any function described below is defined as an individual-UE capability (UE radio capability or UE core network capability) and may be transmitted by the UE to the base station/core network entity (e.g. AMF/SMF)/counterpart UE through corresponding signaling. Alternatively, arbitrary functions may be combined/merged are defined as the corresponding UE capability, and then transmitted to the base station/core network entity/counterpart UE through corresponding signaling by the UE. The base station may transmit/indicate information that allows/supports/configures the corresponding function/function combination for any of the functions or function combinations, described below, to the UE through an RRC message. For example, the corresponding RRC message may be indicated to the UE before, after, or simultaneously with configuring/applying the corresponding function/function combination. The RRC message may be broadcast through system information. Alternatively, the corresponding indication information may be delivered to the UE through a dedicated RRC message or via sidelink BCCH/DCCH.

The functions described below may be performed individually and independently. Additionally, the functions described below may be arbitrarily combined/merged and it is evident that they are also included in the scope of the present embodiments. For example, one or more functions may be applied simultaneously.

In the disclosure, a remote UE may refer to a UE that is connected to a base station through a relay UE to perform communication. A relay UE refers to a UE that performs the function of associating a remote UE with a base station. The remote UE may be associated with the base station through a direct path and an indirect path. Therefore, in the disclosure, "remote UE'' and "relay UE'' are terms to refer to UEs that provide corresponding functions, but the disclosure is not limited thereto. Operations of a remote UE and a base station according to the present embodiments are described below with reference to the drawings.

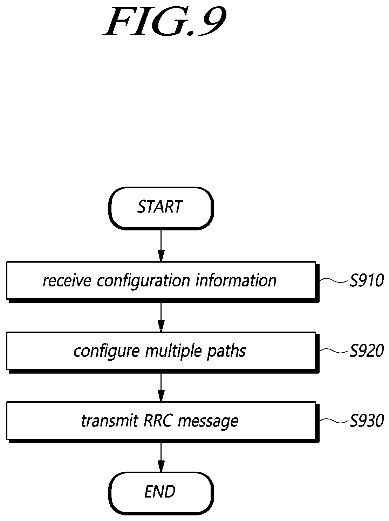

FIG. 9 is a flowchart illustrating operations of a remote UE according to an embodiment.

Referring to FIG. 9, a remote UE performing communication through a plurality of paths may perform a step of receiving configuration information for configuring a plurality of paths including a direct path and an indirect path from a base station (S910).

According to an embodiment, the remote UE may receive configuration information for configuring the plurality of paths including a direct path to the base station and an indirect path through the relay UE. The configuration information may be received from the base station through higher layer signaling. For example, the configuration information may be received through an RRC message. As another example, the configuration information may be received through the relay UE.

The configuration information may include at least one of direct path add configuration information, indirect path add configuration information, direct path RLC bearer configuration information, indirect path RLC bearer configuration information, bearer mapping configuration information, direct path radio bearer configuration information, indirect path radio bearer configuration information, split signaling radio bearer (SRB) configuration information, split data radio bearer (DRB) configuration information, and L2 relay UE identification information. According to an embodiment, the configuration information may include direct path add configuration information for additionally configuring a direct path in the remote UE. Furthermore, the configuration information may include indirect path add configuration information for additionally configuring an indirect path in the remote UE. Moreover, the configuration information may include direct path RLC bearer configuration information and/or indirect path RLC bearer configuration information for configuring a path for each bearer. Alternatively, the configuration information may include bearer mapping configuration information for mapping a bearer and a path. In addition, the configuration information may include at least one of direct path radio bearer configuration information, indirect path radio bearer configuration information, split SRB configuration information, and split DRB configuration information. The configuration information may include L2 relay UE identification information connected to the remote UE.

The remote UE may perform a step of configuring a plurality of paths by applying the configuration information (S920).

According to an embodiment, if the remote UE receives the configuration information from the base station, the remote UE may configure a plurality of paths in the UE based on the corresponding configuration information. For example, the remote UE may configure a primary path of the split signaling radio bearer (SRB) as a direct path. As another example, the remote UE may configure an indirect path by establishing a PC5 RRC connection with the relay UE.

The remote UE may be configured by adding a direct path and/or an indirect path using information included in the configuration information. Alternatively, the remote UE may configure a radio bearer indicated by the configuration information in the UE to control communication using the direct path and/or the indirect path.

The remote UE may perform communication with the base station through the plurality of configured paths. However, communication restrictions may occur due to various factors during communication. For example, a communication failure circumstance, such as a radio link failure, may be detected.

If a radio link failure is detected in at least one of the plurality of paths, the remote UE may perform a step of transmitting an RRC message (S930).

According to an embodiment, the remote UE may monitor whether a radio link failure occurs in the plurality of paths. If a radio link failure is detected in one or more of the plurality of paths, the remote UE may transmit information about the failure through an RRC message indicating the failure.

For example, when the path in which the radio link failure is detected is the direct path, the RRC message may be transmitted as a path failure report through the indirect path.

As another example, when the path in which the radio link failure is detected is the indirect path, the RRC message may be transmitted as the path failure report through the direct path.

According to an embodiment, the radio link failure detected on the indirect path may be due to a sidelink failure or a radio link failure between the relay UE and the base station on the indirect path. In other words, when a sidelink failure is detected, a communication problem occurs between the remote UE and the relay UE, causing a radio link failure to be detected on the indirect path. Alternatively, if a radio link failure occurs between the relay UE and the base station, the remote UE may detect the radio link failure on the indirect path. In this case, the radio link failure between the relay UE and the base station may be reported.

According to another embodiment, if a radio link failure is detected in both the direct path and the indirect path, the remote UE may perform a cell selection operation or a relay selection operation according to the RRC reconfiguration procedure. Furthermore, if a radio link failure is detected in both the direct and indirect paths, the remote UE may transmit an RRC reconfiguration request message to the base station. The cell selection or relay selection operation may be performed either before or after transmission of an RRC reconfiguration request message. Alternatively, the transmission of the RRC reconfiguration request message may be performed as part of cell selection and relay selection operation.

Meanwhile, the RRC message transmitted through path failure reporting may include failure cause information. Alternatively, the RRC message may include information about the radio bearer in which the radio link failure is detected, failure type information, or other relevant details.

Meanwhile, the base station may also transmit an RRC reconfiguration message for indirect path configuration to the relay UE that provides connectivity between the remote UE and the base station before step S910.

According to the embodiments described above, the remote UE that performs communication through the plurality of different paths of the direct path and the indirect path may take rapid action when a radio link failure is detected to prevent deterioration of the communication context.

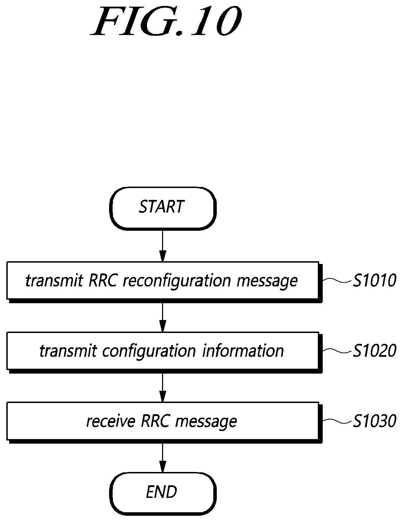

FIG. 10 is a flowchart for describing operations of a base station according to an embodiment.

Referring to FIG. 10, the base station that controls communication through multiple paths of a remote UE may perform a step of transmitting an RRC reconfiguration message for indirect path configuration to the relay UE that provides a connection with the remote UE (S1010).

According to an embodiment, the base station may transmit, to the relay UE, an RRC reconfiguration message for configuring an indirect path for the remote UE. Accordingly, the relay UE may configure an indirect path with the indicated remote UE to transfer data of the remote UE to the base station. Further, data of the remote UE received from the base station may be transferred to the remote UE.

However, step S1010 may be performed only when an indirect path is added to the remote UE. In other words, in a circumstance where the remote UE and the relay UE configure the indirect path, if a direct path is added to the remote UE, step S1020 may be performed without requiring step S1010. Accordingly, step S1010 may be performed optionally only when necessary.

The base station may perform a step of transmitting configuration information to remote UE for configuring a plurality of paths, including a direct path and an indirect path (S1020).

According to an embodiment, the base station may transmit configuration information for configuring multiple paths, including a direct path to the remote UE and an indirect path through the relay UE. For example, the configuration information may be transmitted from the base station through higher layer signaling. For example, the configuration information may be transmitted through an RRC message. As another example, the configuration information may be transferred to the remote UE through the relay UE.

The configuration information may include at least one of the following: i) direct path add configuration information, ii) indirect path add configuration information, iii) direct path RLC bearer configuration information, iv) indirect path RLC bearer configuration information, v) bearer mapping configuration information, vi) direct path radio bearer configuration information, vii) indirect path radio bearer configuration information, viii) split signaling radio bearer (SRB) configuration information, ix) split data radio bearer (DRB) configuration information, and x) L2 relay UE identification information. For example, the configuration information may include direct path add configuration information for additionally configuring a direct path in the remote UE. Furthermore, the configuration information may include indirect path add configuration information for additionally configuring an indirect path in the remote UE. Moreover, the configuration information may include direct path RLC bearer configuration information and/or indirect path RLC bearer configuration information for configuring a path for each bearer. Alternatively, the configuration information may include bearer mapping configuration information for mapping a bearer and a path. In addition, the configuration information may include at least one of the following: a) direct path radio bearer configuration information, b) indirect path radio bearer configuration information, c) split SRB configuration information, and d) split DRB configuration information. The configuration information may include L2 relay UE identification information connected to the remote UE.

According to an embodiment, if the remote UE receives the configuration information from the base station, the remote UE may configure multiple paths in the UE based on the corresponding configuration information. For example, the remote UE may configure a primary path of the split signaling radio bearer (SRB) as a direct path. As another example, the remote UE may configure an indirect path by establishing a PC5 RRC connection with the relay UE.

The remote UE may be configured by adding a direct path and/or an indirect path using information included in the configuration information. Alternatively, the remote UE may configure a radio bearer indicated by the configuration information in the UE to control communication using the direct path and/or the indirect path.

The base station may perform communication with the remote UE through the multiple configured paths. However, communication restrictions may occur due to various factors during communication. For example, a communication failure event, such as a radio link failure, may occur. The remote UE may monitor whether a radio link failure occurs.

The base station may, upon detecting a radio link failure in at least one of the multiple paths in the remote UE, perform a step of receiving an RRC message (S1030).

According to an embodiment, the remote UE may monitor whether a radio link failure occurs in the multiple paths. If a radio link failure is detected in one or more of the multiple paths, the base station may receive information about the failure occurrence through an RRC message.

For example, when the radio link failure is detected in the direct path, the RRC message may be received as path failure report through the indirect path.

As another example, when the radio link failure is detected in the indirect path, the RRC message may be received as the path failure report through the direct path.

For example, the radio link failure detected on the indirect path may result from a sidelink failure or a radio link failure between the relay UE and the base station on the indirect path. In other words, when a sidelink failure is detected, a communication problem occurs between the remote UE and the relay UE, leasing to a radio link failure being detected on the indirect path. Alternatively, if a radio link failure occurs between the relay UE and the base station, the remote UE may detect the radio link failure on the indirect path. In this case, the radio link failure between the relay UE and the base station may be reported.

As another example, if a radio link failure is detected in both the direct path and the indirect path, the remote UE may perform a cell selection operation or a relay selection operation according to the RRC reconfiguration procedure. Furthermore, if a radio link failure is detected in both the direct and indirect paths, the remote UE may transmit an RRC reconfiguration request message to the base station, which may then receive request (e.g., the RRC reconfiguration request message) The cell selection or relay selection operation by the remote UE may be performed either before or after the reception of an RRC reconfiguration request message. Alternatively, reception of the RRC reconfiguration request message may be considered part of cell selection and relay selection operation processes.

Meanwhile, the RRC message transmitted through path failure reporting may include failure cause information. Alternatively, the RRC message may include information about the radio bearer in which the radio link failure is detected, failure type information, or other relevant details.

According to the embodiments described above, the remote UE that performs communication through the multiple different paths, including the direct path and the indirect path, may take a rapid action when a radio link failure is detected to prevent deterioration of the communication context.

Hereinafter, more embodiments and various functions that may be performed by the above-described remote UE, relay UE, and base station will be described in greater detail. The functions and embodiments described below may be arbitrarily combined and performed by the remote UE, the relay UE, and the base station.

For convenience of description, hereinafter, the term "L2 U2N remote UE" is will refer to a remote UE. This is solely for convenience of description, and any UE connected to the network through any relay UE/node, such as an L3 U2N remote UE, an IAB, a mobile-IAB, or similar entities, may be included under the definition of a remote UE. The interface between the remote UE and the relay UE may be connected through PC5, F1, or any non-3GPP technology.

Add/modify/release a path of the remote UE

The remote UE in the RRC idle/inactive state may establish an indirect path (a procedure for UE connection setup for the remote UE or SRB/DRB setup for transmitting/receiving user plane data and/or RRC message through the indirect path) through the relay UE. Thereafter, the base station serving the remote UE may add a direct path for the UE.

For example, the remote UE and the relay UE may perform a sidelink discovery procedure and establish a PC5-RRC connection. The remote UE may transmit an RRC message (e.g., an RRC setup request) for connection setup with the base station to the base station through the relay UE. If the relay UE is not in the RRC connected state, the relay UE receiving the message on the corresponding PC5 relay RLC channel may perform (RRC) connection setup. During the RRC connection setup of the relay UE, the base station may configure SRB0 for relaying the Uu relay RLC channel to the relay UE. The base station may respond with an RRC setup message to the remote UE. The RRC setup message may be transmitted to the remote UE using an SRB0 relaying channel through Uu and a corresponding PC5 relay RLC channel through PC5. The base station and the relay UE may perform a relay channel setup procedure through Uu. The relay/remote UE may set up a PC5 relay RLC channel for SRB1 relaying. The remote UE transmits an RRC setup complete message through the relay UE. The remote UE and the base station set up security. The base station may transmit an RRC reconfiguration message to the remote UE through the relay UE to set up the SRB2/DRBs for relay purposes. The corresponding RRC reconfiguration message may include configuration information for adding/modifying/releasing a path of the remote UE. For example, the configuration information may include one or more of the following: a measurement configuration, a reporting configuration, cell group configuration information (CellGroupConfig) about the direct path of the remote UE, RLC bearer configuration information about the direct path, an SRB0/SRB1/SRB2/DRBs configuration through the direct path, a (sidelink) SRB0/SRB1/SRB2/DRBs configuration through the indirect path of the remote UE, an SRAP configuration for the sidelink L2 remote UE, PC5 (relay) RLC channel configuration information between the relay UE and the remote UE, and a split SRB1/SRB2/DRBs configuration using both the indirect path and the direct path.

The remote UE may set up the direct path. Thereafter, the base station serving the remote UE may add an indirect path through the relay UE. For example, the remote UE may perform an RRC setup procedure with the base station. The base station may transmit an RRC reconfiguration message to the remote UE through the Uu interface to add SRBs/DRBs for relay purposes. The RRC reconfiguration message may include configuration information for adding/modifying/releasing a path of the remote UE. For example, the configuration information may include one or more of the following: a measurement configuration, a reporting configuration, cell group configuration information (CellGroupConfig) about the direct path of the remote UE, RLC bearer configuration information about the direct path, an SRB0/SRB1/SRB2/DRBs configuration through the direct path, a (sidelink) SRB0/SRB1/SRB2/DRBs configuration through the indirect path of the remote UE, an SRAP configuration for the sidelink L2 remote UE, PC5 (relay) RLC channel configuration information between the relay UE and the remote UE, a split SRB 1/SRB2/DRBs configuration using both the indirect path and the direct path, a source/destination L2 ID for the relay UE or remote UE, a relay UE ID, a local ID of the remote UE, an L2 ID, a C-RNTI, a Uu and PC5 relay RLC channel configuration for relaying, and a bearer mapping configuration. In order to add/modify/release an indirect path, the remote UE and the relay UE may perform a sidelink discovery procedure. The remote UE may set up a PC5-RRC connection with the relay UE. The remote UE or the relay UE may indicate corresponding PC5-RRC connection information to the base station.

Before, simultaneously with, or after the base station transmits the RRC reconfiguration message to the remote UE through the Uu interface on the direct path, the base station may transmit the RRC reconfiguration message to the relay UE. The RRC reconfiguration message may include one or more of the following: a source/destination L2 ID for the relay UE or the remote UE, a relay UE ID, a local ID of the remote UE, an L2 ID, a C-RNTI, a Uu and PC5 relay RLC channel configuration for relaying and a bearer mapping configuration. Alternatively, the RRC reconfiguration message transmitted by the base station to the remote UE through the Uu interface on the direct path may include a container/IE/command in the RRC reconfiguration message for the relay UE configuration. The remote UE may transmit the corresponding container/IE/command to the relay UE. A corresponding configuration may be applied to the relay UE and an RRC reconfiguration complete message confirming the update may be transmitted to the base station. Alternatively, the base station may transmit the RRC reconfiguration message to the remote UE through the indirect path. In this case, the corresponding RRC reconfiguration message may be included in the RRC reconfiguration message for the relay UE configuration through the container/IE/command. The base station and the relay UE may perform a relay channel setup procedure through Uu. According to the configuration received from the base station, the relay UE and the remote UE may set up a PC5 relay RLC channel for SRB/DRB relaying. The remote UE may transmit the RRC reconfiguration complete message through the direct path.

When the remote UE sets up/configures/modifies the direct path and the indirect path to the UE through path addition/modification (e.g., when setting up/configuring/modifying RRC/SRBs/DRBs through a plurality of paths including a direct path and an indirect path to the UE), one of the plurality of (or two) paths may be indicated/configured/set up/considered as a primary path. For convenience of description, the path used for default/priority transmission/reception of one or more of the following: the RRC message, PDCP control PDU, and PDCP data PDU (e.g., user data) in the UE, which is configured simultaneously with direct and indirect paths, is indicated as the primary path. This designation is solely for convenience of description and may be replaced by any other name.

For example, among the multiple paths, the initial or a first path where the remote UE establishes the RRC connection may be considered the primary path for the remote UE. The base station may configure a secondary path for the corresponding remote UE through the primary path. Alternatively, the primary path may be selected from the direct path or the indirect path. In another example, the primary path may be selected from an RLC entity and an SRAP/PC5-RLC entity for uplink data transmission. Additionally, the primary path may be configured to indicate the primary RLC entity/PC5-RLC entity for transmitting the PDCP control PDU. The corresponding RLC entity/PC5-RLC entity may be distinguished through the PCell LCID/SL-LCID. Furthermore, a PDCP control PDU may be transmitted through the primary path. Alternatively, the primary path may be indicated/configured/designated with information distinct from that used to indicate the primary RLC entity/PC5-RLC entity for transmitting the PDCP control PDU. For example, the PCDP control PDU may be transmitted through a non-primary path.

In another example, the PCell of the remote UE may be a cell that serves the primary path. For example, if the direct path of the remote UE is the primary path, the PCell serving the remote UE acts as the PCell of the remote UE. Conversely, if the indirect path of the remote UE is the primary path, the PCell serving the relay UE may be the PCell of the remote UE.

In another example, the base station may configure information to indicate the primary path for the remote UE through the RRC reconfiguration message.

In another example, the primary path may be a default path through which most or all the RRC messages are transmitted. Additionally, an RRC message provided through a non-primary path (e.g., a secondary path) may be limited to a specific RRC message. For example, if an RLF is declared/detected on the primary path, a message for notifying of/indicating the information (e.g., failure information) may be transmitted to the base station through the secondary path. Alternatively, any UE assistance information that aids in determining the appropriate path may be transmitted to the base station through the secondary path.

In another example, if multiple paths are configured in the UE, one or more of the following: i) a radio bearer/SRB/DRB through the direct path, ii) a radio bearer/SRB/DRB through the indirect path, and iii) a split radio bearer/SRB/DRB using both the direct path and the indirect path may be configured.

In another example, if a radio link failure is detected on the primary path, the remote UE may trigger an RRC reconfiguration on the primary path. In another example, if a radio link failure is detected on the primary path and if the remote UE is capable of transmitting and receiving data through the secondary path, the remote UE may switch the primary path to the secondary path and then transmit and receive data through the secondary path. To that end, a conditional path change configuration may be set up in the UE. The configuration may be set up through a candidate path configuration and execution conditions. The corresponding path configuration may include one or more of the pieces of the configuration information (e.g., parameters) described in the disclosure.

In another example, the remote UE may trigger an RRC reconfiguration only on the primary path. Furthermore, the remote UE may perform cell selection or relay selection between the primary path and the secondary path. In addition, a (priority) path through which the remote UE is to trigger the RRC reconfiguration may be configured in the UE by the base station.

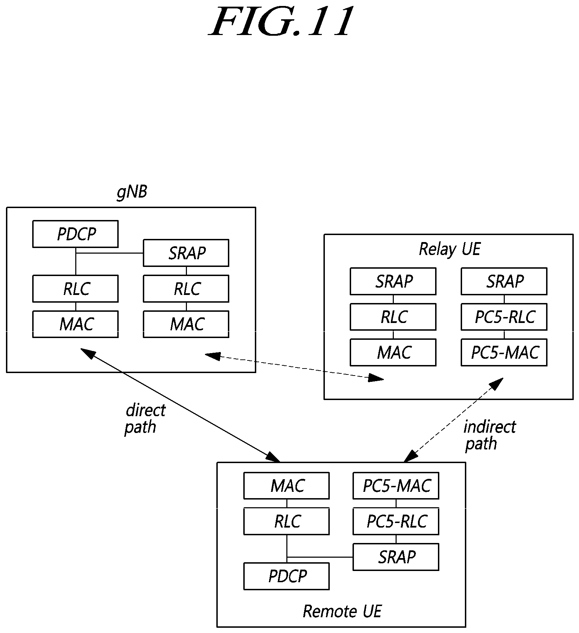

FIG. 11 is a view illustrating an example of a split radio bearer/SRB/DRB configuration through a plurality of paths.

Referring to FIG. 11, the remote UE may be connected to the base station via the relay UE through the indirect path. Alternatively, the remote UE may be directly connected to the base station through the direct path. When the remote UE is connected to the base station through the direct path, the PDCP, RLC, and MAC entities in the remote UE and the base station may be configured to transmit and receive data. When the remote UE is connected to the base station through the indirect path, the PC5-MAC, PC5-RLC, and SRAP of the remote UE and the relay UE may be configured. The relay UE is connected to the base station through the MAC, RLC, and SRAP entities.

Radio link failure processing by a UE with a plurality of paths configured

The remote UE may perform radio link monitoring only on the primary path. Alternatively, the remote UE may perform radio link monitoring on both the primary path and the secondary path.

For example, when the remote UE establishes an initial RRC connection through the relay UE and is connected to the base station (or when the remote UE is connected to the base station using the indirect path as the primary path), the remote UE may suspend radio link monitoring (RLM) on the radio link (Uu) between the UE and the base station (or on the direct path).

In another example, when the remote UE establishes an initial RRC connection through the relay UE and is connected to the base station (or when the remote UE is connected to the base station using the indirect path as the primary path), the remote UE may perform RLM on the radio link (Uu) between the UE and the base station (or on the direct path).

In another example, when the remote UE establishes an initial RRC connection through the relay UE and is connected to the base station (or when the remote UE is connected to the base station using the indirect path as the primary path), if the remote UE is instructed to transmit uplink data through the direct path, the remote UE may perform RLM on the radio link (Uu) between the UE and the base station (or on the direct path).

Similarly, when the remote UE establishes an initial RRC connection through the relay UE and is connected to the base station (or when the remote UE is connected to the base station using the indirect path as the primary path), if the remote UE detects a sidelink radio link failure, if the remote UE receives a sidelink notification message according to a specific operation of the relay UE in the RRC connected state, or if the remote UE receives a PC5 unicast link release indicated by higher layer in the RRC connected state, the remote UE may perform/resume RLM on the radio link (Uu) between the UE and the base station (or on the direct path).

In another example, when the remote UE is connected to the base station using the secondary path through the relay UE (or when the remote UE is connected to the base station using the indirect path as the secondary path), the remote UE may perform RLM on the radio link (Uu) between the UE and the base station.

In another example, when the remote UE establishes an initial RRC connection through the relay UE and is connected to the base station (or when the remote UE is connected to the base station using the indirect path as the primary path), if the remote UE detects a sidelink radio link failure in the RRC connected state (e.g., upon indication from sidelink RLC entity that the maximum number of retransmissions for a specific destination has been reached; or upon T400(Upon transmission of RRCReconfigurationSidelink) expiry for a specific destination; or upon indication from MAC entity that the maximum number of consecutive HARQ DTX for a specific destination has been reached; or upon integrity check failure indication from sidelink PDCP entity concerning SL-SRB2 or SL-SRB3 for a specific destination) or if the remote UE receives a sidelink notification message according to a specific operation of the relay UE in the RRC connected state (e.g., upon Uu RLF; upon reception of an RRCReconfiguration including the reconfigurationWithSync; upon cell reselection; upon L2 U2N Relay UE's RRC connection failure including RRC connection reject and T300 expiry and RRC resume failure), the remote UE may suspend transmission through the indirect path for SRBs and DRBs (all except for SRBO/broadcast-MRB). If it is determined that PC5-RRC connection with the relay UE is released, the remote UE may perform PC5-RRC connection release. The remote UE may release the sidelink radio bearer with the relay UE. The remote UE and/or may release the L2 entity through the indirect path for the split bearer. Alternatively, if the PC5-RRC connection with the relay UE is determined to be released when the remote UE receives PC5 unicast link release indicated by the higher layer in the RRC connected state, the remote UE may perform PC5-RRC connection release. The remote UE may perform cell selection according to a cell selection process or relay selection according to a relay selection procedure. The remote UE may then initiate transmission of an RRC reconfiguration request message. For example, the remote UE may transmit an RRC reconfiguration request message through the selected cell. Alternatively, the remote UE may transmit an RRC reconfiguration request message to the base station through the selected relay.

In another example, when the remote UE establishes an initial RRC connection through the relay UE and is connected to the base station (or when the remote UE is connected to the base station using the indirect path as the primary path), if the remote UE detects a sidelink radio link failure, if the remote UE receives a sidelink notification message according to a specific operation of the relay UE in the RRC connected state, or if the remote UE receives a PC5 unicast link release indicated by higher layer in the RRC connected state, the remote UE may suspend transmission through the indirect path for SRBs and DRBs (all except for SRBO/broadcast-MRB). If it is determined that PC5-RRC connection with the relay UE is released, the remote UE may perform PC5-RRC connection release. The remote UE may release the sidelink radio bearer with the relay UE. The remote UE may and/or release the L2 entity through the indirect path for the split bearer. If the direct path is maintained or the direct path meets an indicated specific condition (e.g., a threshold, a timing advance timer or a specific timer operation), the remote UE may transmit, to the base station, information for indicating one or more (or corresponding cause) of sidelink notification message reception and PC5-RRC connection release. If the direct path is maintained or the direct path meets an indicated specific condition (e.g., a threshold, a timing advance timer, or a specific timer operation), the remote UE may maintain the wireless connection with the corresponding cell. The remote UE may maintain data communication through the corresponding cell. The base station may configure/modify/reconfigure the radio bearer/SRB/DRB through the direct path through the RRC reconfiguration message. The base station may release/modify/reconfigure the radio bearer/SRB/DRB and/or split radio bearer/SRB/DRB through the indirect path through the RRC reconfiguration message (e.g., reconfigures the split radio bearer/SRB/DRB into radio bearer/SRB/DRB through the direct path).

In another example, when the remote UE establishes an initial RRC connection through the relay UE and is connected to the base station (or when the remote UE is connected to the base station using the indirect path as the primary path), if the remote UE detects a sidelink radio link failure, if the remote UE receives a sidelink notification message according to a specific operation of the relay UE in the RRC connected state, or if the remote UE receives a PC5 unicast link release indicated by higher layer in the RRC connected state, the remote UE may suspend transmission through the indirect path for SRBs and DRBs (all except for SRBO/broadcast-MRB). Alternatively, the remote UE may suspend SRBs and DRBs (all through the indirect path, except for SRBO/broadcast-MRB). If it is determined that PC5-RRC connection with the relay UE is released, the remote UE may perform PC5-RRC connection release. (Simultaneously with, after, or before the RLF on the primary path) If the remote UE detects a radio link failure on the direct path, the remote UE may suspend transmission through the direct path/indirect path for SRBs and DRBs (all except for SRB0/broadcast-MRB). Alternatively, the remote UE may suspend SRBs and DRBs (all except for SRB0/broadcast-MRB).

The remote UE may perform cell selection according to a cell selection process or relay selection according to a relay selection procedure. The remote UE may initiate transmission of an RRC reconfiguration request message. For example, the remote UE may transmit an RRC reconfiguration request message through the selected cell. Alternatively, the remote UE may transmit an RRC reconfiguration request message to the base station through the selected relay.

In another example, when the remote UE establishes an initial RRC connection through the direct path and is connected to the base station (or when the remote UE is connected to the base station using the direct path as the primary path), if the remote UE detects a radio link failure on the direct path (e.g., Uu) in the RRC connected state, the remote UE may suspend transmission through the direct path for SRBs and DRBs (all except for SRBO/broadcast-MRB). Alternatively, the remote UE may suspend SRBs and DRBs (all except for SRB0/broadcast-MRB). The remote UE may perform cell selection according to a cell selection process. The remote UE may initiate transmission of an RRC reconfiguration request message. For example, the remote UE may transmit an RRC reconfiguration request message through the selected cell.

In another example, when the remote UE estabilshes an initial RRC connection through the direct path and is connected to the base station (or when the remote UE is connected to the base station using the direct path as the primary path), if the remote UE detects a radio link failure on the direct path (e.g., Uu) in the RRC connected state, the remote UE may suspend transmission through the direct path for SRBs and DRBs (all except for SRBO/broadcast-MRB). If the remote UE does not detect sidelink radio link failure in the RRC connected state, if the remote UE does not receive a sidelink notification message according to a specific operation of the relay UE in the RRC connected state, or if the remote UE does not receive a PC5 unicast link release indicated by higher layer in the RRC connected state, the remote UE may maintain transmission through the indirect path for SRBs and DRBs. If it is determined that PC5-RRC connection with the relay UE is released, the remote UE may perform PC5-RRC connection release. The remote UE may release the sidelink radio bearer with the relay UE. The remote UE may and/or suspend SRBs and DRBs (all except for SRBO/broadcast-MRB). Additionally, the remote UE may release the L2 entity through the indirect path for the split bearer. Otherwise, the remote UE may maintain the PC5 RRC connection.

If the indirect path is maintained or the indirect path meets an indicated specific condition (e.g., an SD-RSRP/SL-RSRP threshold or a specific timer operation), the remote UE may transmit, to the base station, information for indicating a direct path radio link failure through the indirect path. If the indirect path is maintained or the indirect path meets an indicated specific condition (e.g., a threshold or a specific timer operation), the remote UE may maintain the wireless connection through the corresponding path. Data communication may be maintained through the corresponding path. The base station may set up/modify/reconfigure the radio bearer/SRB/DRB through the indirect path through the RRC reconfiguration message. The base station may release/modify/reconfigure the radio bearer/SRB/DRB and/or split radio bearer/SRB/DRB through the direct path through the RRC reconfiguration message (e.g., reconfigures the split radio bearer/SRB/DRB into radio bearer/SRB/DRB through the indirect path).

In another example, when the remote UE establishes an initial RRC connection through the direct path and is connected to the base station (or when the remote UE is connected to the base station using the direct path as the primary path), if the remote UE detects a radio link failure on the direct path (e.g., Uu) in the RRC connected state, the remote UE may suspend transmission through the direct path for SRBs and DRBs (all except for SRBO/broadcast-MRB). If the remote UE detects sidelink radio link failure in the RRC connected state, if the remote UE receives a sidelink notification message according to a specific operation of the relay UE in the RRC connected state, or if the remote UE receives a PC5 unicast link release indicated by higher layer in the RRC connected state, the remote UE may suspend transmission through the indirect path for SRBs and DRBs (all except for SRBO/broadcast-MRB). Alternatively, the remote UE may suspend SRBs and DRBs (all through the indirect path except for SRBO/broadcast-MRB). Furthermore, the remote UE may suspend transmission through the direct path/indirect path for SRBs and DRBs. In addition, the remote UE may suspend SRBs and DRBs (all except for SRBO/broadcast-MRB).

The remote UE may perform cell selection according to a cell selection process or relay selection according to a relay selection procedure. The remote UE may initiate transmission of an RRC reconfiguration request message. For example, the remote UE may transmit an RRC reconfiguration request message through the selected cell. Alternatively, the remote UE may transmit an RRC reconfiguration request message to the base station through the selected relay.

In another example, when the remote UE establishes an initial RRC connection through the direct path and is connected to the base station (or when the remote UE is connected to the base station using the direct path as the primary path), if the remote UE detects a sidelink radio link failure, or if the remote UE receives a sidelink notification message due to to a specific operation of the relay UE in the RRC connected state, the remote UE may suspend transmission through the indirect path for SRBs and DRBs (all except for SRBO/broadcast-MRB). If it is determined that PC5-RRC connection with the relay UE is released, the remote UE may perform PC5-RRC connection release. The remote UE may also release the sidelink radio bearer with the relay UE. and/or release the L2 entity through the indirect path for the split bearer. Alternatively, if the PC5-RRC connection with the relay UE is determined to be released when the remote UE receives PC5 unicast link release indicated by the higher layer in the RRC connected state, the remote UE may perform PC5-RRC connection release. The remote UE may transmit, to the base station, information for indicating one or more (or corresponding cause) of sidelink radio link failure, sidelink notification message reception, and PC5-RRC connection release through the direct path. If the direct path is maintained or meets a specific condition (e.g., a threshold, a timing advance timer, or a specific timer operation), the remote UE may maintain the wireless connection with the corresponding cell. The remote UE may maintain data communication through the corresponding cell. The base station may set up/modify/reconfigure the radio bearer/SRB/DRB through the direct path through the RRC reconfiguration message. The base station may release/modify/reconfigure the radio bearer/SRB/DRB and/or split radio bearer/SRB/DRB through the indirect path through the RRC reconfiguration message (e.g., reconfigures the split radio bearer/SRB/DRB into radio bearer/SRB/DRB through the direct path).

According to the embodiments of the disclosure, the remote UE may stably transmit data through of the multiple paths and effectively handle radio link failure. Hereinafter, configurations of a UE and a base station, which are capable of performing the operations of the remote UE, the relay UE, and the base station according to the embodiments descried above, will be described. For convenience, although not explicitly described, each entity may perform all or some of the above-described operations according to the embodiments.

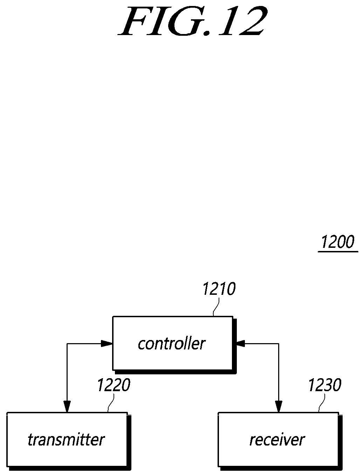

FIG. 12 is a block diagram illustrating a remote UE according to an embodiment.

Referring to FIG. 12, a remote UE 1200 performing communication through multiple paths may include a receiver 1230 receiving configuration information for configuring (e.g., establishing) multiple paths including a direct path and an indirect path from a base station, a controller configuring (e.g., establishing) the multiple paths by applying the configuration information, and a transmitter 1220, upon detecting a radio link failure in at least one of the multiple paths, transmitting an RRC message.

According to an embodiment, the receiver 1230 may receive configuration information for configuring the multiple paths including a direct path to the base station and an indirect path through the relay UE. For example, the configuration information may be received from the base station through higher layer signaling. For example, the configuration information may be received through an RRC message. In another example, the configuration information may be received through the relay UE.

For example, the configuration information may include at least one of the following: i) direct path add configuration information, ii) indirect path add configuration information, iii) direct path RLC bearer configuration information, iv) indirect path RLC bearer configuration information, v) bearer mapping configuration information, vi) direct path radio bearer configuration information, vii) indirect path radio bearer configuration information, viii) split signaling radio bearer (SRB) configuration information, ix) split data radio bearer (DRB) configuration information, and x) L2 relay UE identification information. For example, the configuration information may include direct path add configuration information for additionally configuring a direct path in the remote UE. Furthermore, the configuration information may include indirect path add configuration information for additionally configuring an indirect path in the remote UE. In addition, the configuration information may include direct path RLC bearer configuration information and/or indirect path RLC bearer configuration information for configuring a path for each bearer. Alternatively, the configuration information may include bearer mapping configuration information for mapping a bearer and a path. Moreover, the configuration information may include at least one of the following: a) direct path radio bearer configuration information, b) indirect path radio bearer configuration information, c) split SRB configuration information, and d) split DRB configuration information. The configuration information may include L2 relay UE identification information connected to the remote UE.

Meanwhile, if receiving the configuration information from the base station, the controller 1210 may configure multiple paths in the UE based on the corresponding configuration information. For example, the controller 1210 may configure a primary path of the split signaling radio bearer (SRB) as a direct path. In another example, the controller 1210 may configure an indirect path by establishing a PC5 RRC connection with the relay UE.

The controller 1210 may be configured by adding a direct path and/or an indirect path using information included in the configuration information. Alternatively, the controller 1210 may configure a radio bearer indicated by the configuration information in the UE to control communication using the direct path and/or the indirect path.

The controller 1210 may perform communication with the base station through the multiple configured paths. However, communication restrictions may occur due to various factors during communication. For example, a communication failure event, such as a radio link failure, may be detected.

For example, the controller 1210 may monitor whether a radio link failure occurs in the multiple paths. If a radio link failure is detected in one or more of the multiple paths, the transmitter 1220 may transmit information about the failure occurrence through an RRC message.

For example, when the radio link failure is detected on the direct path, the RRC message may be transmitted as path failure report through the indirect path.

Is another example, when the radio link failure is detected on the indirect path, the RRC message may be transmitted as the path failure report through the direct path.

For example, the radio link failure detected on the indirect path may result from a sidelink failure or a radio link failure between the relay UE and the base station on the indirect path. In other words, when a sidelink failure is detected, a communication problem occurs between the remote UE and the relay UE, leading to a radio link failure being detected on the indirect path. Alternatively, if a radio link failure occurs between the relay UE and the base station, the controller 1210 may detect the radio link failure on the indirect path. In this case, the radio link failure between the relay UE and the base station may be reported.

In another example, if a radio link failure is detected in both the direct path and the indirect path, the controller 1210 may perform a cell selection operation or a relay selection operation according to the RRC reconfiguration procedure. Further, if a radio link failure is detected in both the direct and indirect paths, the transmitter 1220 may transmit an RRC reconfiguration request message to the base station. The cell selection or relay selection operation may be performed before or after transmission of an RRC reconfiguration request message. Alternatively, the transmission of the RRC reconfiguration request message may be considered part of cell selection and relay selection operations.

Meanwhile, the RRC message transmitted through path failure reporting may include failure cause information. Alternatively, the RRC message may include information about the radio bearer in which the radio link failure is detected, failure type information, or other relevant details.

Additionally, the controller 1210 manages the overall operation of the remote UE 1200 according to the radio link failure processing operation and configuration of a plurality of paths necessary to perform the above-described disclosure.

The transmitter 1220 and the receiver 1230 are used to transmit/receive signals or messages or data necessary for performing the above-described disclosure, with the base station or the relay UE.

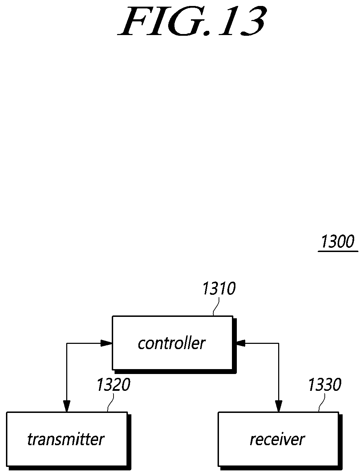

FIG. 13 is a block diagram illustrating a base station according to an embodiment.

Referring to FIG. 13, a base station 1300 controlling communication through a multiple paths of a remote UE may include a transmitter 1320 transmitting an RRC reconfiguration message for configuring an indirect path to a relay UE providing a connection with the remote UE and transmitting configuration information for configuring a multiple paths, including a direct path and the indirect path in the remote UE, to the relay UE, and a receiver 1330, upon detecting a radio link failure in at least one of the multiple paths in the remote UE, receiving an RRC message.

According to an embodiment, the transmitter 1320 may transmit, to the relay UE, an RRC reconfiguration message for configuring an indirect path for the remote UE. Accordingly, the relay UE may configure an indirect path with the indicated remote UE to transfer data of the remote UE to the base station. Further, the relay UE may transfer data of the remote UE received from the base station to the remote UE.

However, the above-described operation may be performed only when an indirect path is added to the remote UE. In other words, if the remote UE and the relay UE have already configured the indirect path, and a direction path is subsequently added to the remote UE, the transmission of the RRC reconfiguration message to the relay UE may be omitted.

Meanwhile, the transmitter 1320 may transmit configuration information to configure multiple paths, including a direct path to the remote UE and an indirect path through the relay UE. For example, the configuration information may be transmitted from the base station through higher layer signaling. For example, the configuration information may be transmitted through an RRC message. In another example, the configuration information may be transferred to the remote UE through the relay UE.

The configuration information may include at least one of the following: i) direct path add configuration information, ii) indirect path add configuration information, iii) direct path RLC bearer configuration information, iv) indirect path RLC bearer configuration information, v)_bearer mapping configuration information, vi) direct path radio bearer configuration information, vii) indirect path radio bearer configuration information, viii) split signaling radio bearer (SRB) configuration information, ix) split data radio bearer (DRB) configuration information, and x) L2 relay UE identification information. For example, the configuration information may include direct path add configuration information for additionally configuring a direct path in the remote UE. Furthermore, the configuration information may include indirect path add configuration information for additionally configuring an indirect path in the remote UE. In addition, the configuration information may include direct path RLC bearer configuration information and/or indirect path RLC bearer configuration information for configuring a path for each bearer. Alternatively, the configuration information may include bearer mapping configuration information for mapping a bearer and a path. Moreover, the configuration information may include at least one of the following: a) direct path radio bearer configuration information, b) indirect path radio bearer configuration information, c) split SRB configuration information, and d) split DRB configuration information. The configuration information may include L2 relay UE identification information connected to the remote UE.

According to an embodiment, if the remote UE receives the configuration information from the base station, the remote UE may configure a multiple paths in the UE based on the corresponding configuration information. For example, the remote UE may configure a primary path of the split signaling radio bearer (SRB) as a direct path. In another example, the remote UE may configure an indirect path by establishing a PC5 RRC connection with the relay UE.

The remote UE may be configured by adding a direct path and/or an indirect path using information included in the configuration information. Alternatively, the remote UE may configure a radio bearer indicated by the configuration information in the UE to control communication using the direct path and/or the indirect path.

The controller 1310 may perform communication with the remote UE through the plurality of configured paths. However, communication restrictions may occur due to various factors during communication. For example, a communication failure event, such as a radio link failure, may occur. The remote UE may monitor whether the radio link fails.

Meanwhile, the remote UE may monitor whether a radio link failure occurs in the multiple paths. If a radio link failure is detected in one or more of the multiple paths, the receiver 1330 may receive information about the failure occurrence through an RRC message.

For example, when the radio link failure is detected in the direct path, the RRC message may be received as path failure report through the indirect path.

As another example, when the radio link failure is detected in the indirect path, the RRC message may be received as the path failure report through the direct path.

For example, the radio link failure detected on the indirect path may result from a sidelink failure or a radio link failure between the relay UE and the base station on the indirect path. In other words, when a sidelink failure is detected, a communication problem occurs between the remote UE and the relay UE, leading to a radio link failure being detected on the indirect path. Alternatively, if a radio link failure occurs between the relay UE and the base station, the remote UE may detect the radio link failure on the indirect path. In this case, the radio link failure between the relay UE and the base station may be reported.

In another example, if a radio link failure is detected in both the direct path and the indirect path, the remote UE may perform a cell selection operation or a relay selection operation according to the RRC reconfiguration procedure. Furthermore, if a radio link failure is detected in both the direct and indirect paths, the remote UE may transmit an RRC reconfiguration request message to the base station. Accordingly, the receiver 1330 may receive the RRC reconfiguration request message. The cell selection or relay selection operation by the remote UE may be performed either before or after reception of an RRC reconfiguration request message. Alternatively, the reception of the RRC reconfiguration request message may be considered part of cell selection and relay selection operation processes.

Meanwhile, the RRC message transmitted through path failure reporting may include failure cause information. Alternatively, the RRC message may include information about the radio bearer in which the radio link failure is detected, failure type information, or other relevant details.

Additionally, the controller 1310 manages the overall operation of the base station 1300 according to the radio link failure processing operation and configuration of multiple paths necessary to implement the operations according to the embodiments of the disclosure.

The transmitter 1320 and the receiver 1330 are used to transmit/receive signals or messages or data necessary for performing the above-described operations according to the embodiments of the disclosure, with the remote UE and the relay UE.

The above-described embodiments may be supported by the standard documents disclosed in IEEE 802, 3GPP, and 3GPP2 which are radio access systems. In other words, steps, components, and parts not described to clarify the technical spirit in the embodiments may be supported by the above-described standard documents. Further, all the terms disclosed in the disclosure may be described by the standard documents disclosed above.

The present embodiments described above may be implemented through various means. For example, the present embodiments may be implemented by various means, e.g., hardware, firmware, software, or a combination thereof.

When implemented in hardware, the method according to the present embodiments may be implemented by, e.g., one or more application specific integrated circuits (ASICs), digital signal processors (DSPs), digital signal processing devices (DSPDs), programmable logic devices (PLDs), field programmable gate arrays (FPGAs), processors, controllers, micro-controllers, or micro-processors.

When implemented in firmware or hardware, the method according to the present embodiments may be implemented in the form of a device, procedure, or function performing the above-described functions or operations. The software code may be stored in a memory unit and driven by a processor. The memory unit may be positioned inside or outside the processor to exchange data with the processor by various known means.

The above-described terms, such as "system," "processor," "controller," "component," "module," "interface," "model," or "unit," described above may generally refer to computer-related entity hardware, a combination of hardware and software, software, or software being executed. For example, the above-described components may be, but are not limited to, processes driven by a processor, processors, controllers, control processors, entities, execution threads, programs, and/or computers. For example, both an application being executed by a controller or a processor and the controller or the processor may be the components. One or more components may reside within a process and/or thread of execution, and the components may be positioned in one device (e.g., a system, a computing device, etc.) or distributed in two or more devices.

The above-described embodiments are merely examples, and it will be appreciated by one of ordinary skill in the art various changes may be made thereto without departing from the scope of the present invention. Accordingly, the embodiments set forth herein are provided for illustrative purposes, but not to limit the scope of the present invention, and should be appreciated that the scope of the present invention is not limited by the embodiments. The scope of the disclosure should be construed by the following claims, and all technical spirits within equivalents thereof should be interpreted to belong to the scope of the disclosure.

### CROSS-REFERENCE TO RELATED APPLICATION

The instant patent application claims priority under 35 U.S.C. 119(a) to Korean Patent Application Nos. 10-2022-0123587 and 10-2023-0121265, filed on September 28, 2022 and September 12, 2023, respectively, in the Korean Intellectual Property Office, the disclosures of which are herein incorporated by reference in their entireties. The present patent application claims priority to other applications to be filed in other countries, the disclosures of which are also incorporated by reference herein in their entireties.

## Claims

1. A method for performing communication through a plurality of paths by a remote UE, the method comprising:
receiving configuration information for configuring a plurality of paths including a direct path and an indirect path from a base station;
configuring the plurality of paths by applying the configuration information; and
upon detecting a radio link failure in at least one of the plurality of paths, transmitting an RRC message.

2. The method of claim 1, wherein the configuration information includes at least one of direct path add configuration information, indirect path add configuration information, direct path RLC bearer configuration information, indirect path RLC bearer configuration information, bearer mapping configuration information, direct path radio bearer configuration information, indirect path radio bearer configuration information, split signaling radio bearer (SRB) configuration information, split data radio bearer (DRB) configuration information, and L2 relay UE identification information.

3. The method of claim 1, wherein configuring the plurality of paths configures a primary path of a split signaling radio bearer (SRB) as the direct path and establishes a PC5 RRC connection with a relay UE.

4. The method of claim 1, wherein the RRC message is transmitted as path failure reporting through the indirect path when a path where the radio link failure is detected is the direct path, and is transmitted as the path failure reporting through the direct path when the path where the radio link failure is detected is the indirect path.

5. The method of claim 4, wherein the radio link failure detected on the indirect path is a notification due to a sidelink failure or a radio link failure between the relay UE and the base station on the indirect path.

6. The method of claim 1, wherein transmitting the RRC message performs a cell selection or relay selection operation according to an RRC reconfiguration procedure and transmits an RRC reconfiguration request message to the base station if a radio link failure is detected in both the direct path and the indirect path.

7. A method for controlling communication through a plurality of paths of a remote UE by a base station, the method comprising:
transmitting an RRC reconfiguration message for configuring an indirect path to a relay UE providing a connection with the remote UE;
transmitting configuration information for configuring a plurality of paths including a direct path and the indirect path in the remote UE to the relay UE; and
upon detecting a radio link failure in at least one of the plurality of paths in the remote UE, receiving an RRC message.

8. The method of claim 7, wherein the configuration information includes at least one of direct path additional configuration information, indirect path additional configuration information, direct path RLC bearer configuration information, indirect path RLC bearer configuration information, bearer mapping configuration information, direct path radio bearer configuration information, indirect path radio bearer configuration information, split signaling radio bearer (SRB) configuration information, split data radio bearer (DRB) configuration information, and L2 relay UE identification information.

9. The method of claim 7, wherein the RRC message is received as path failure reporting through the indirect path when a path where the radio link failure is detected is the direct path, and is received as the path failure reporting through the direct path when the path where the radio link failure is detected is the indirect path.

10. The method of claim 9, wherein the radio link failure detected on the indirect path is a notification due to a sidelink failure or a radio link failure between the relay UE and the base station on the indirect path.

11. The method of claim 7, wherein the RRC message is an RRC reconfiguration request message according to an RRC reconfiguration procedure if a radio link failure is detected in both the direct path and the indirect path.

12. A remote UE performing communication through a plurality of paths, comprising:
a receiver receiving configuration information for configuring a plurality of paths including a direct path and an indirect path from a base station;
a controller configuring the plurality of paths by applying the configuration information; and
a transmitter, upon detecting a radio link failure in at least one of the plurality of paths, transmitting an RRC message.

13. The remote UE of claim 12, wherein the configuration information includes at least one of direct path add configuration information, indirect path add configuration information, direct path RLC bearer configuration information, indirect path RLC bearer configuration information, bearer mapping configuration information, direct path radio bearer configuration information, indirect path radio bearer configuration information, split signaling radio bearer (SRB) configuration information, split data radio bearer (DRB) configuration information, and L2 relay UE identification information.

14. The remote UE of claim 12, wherein the controller configures a primary path of a split signaling radio bearer (SRB) as the direct path and configures a PC5 RRC connection with a relay UE to configure the plurality of paths.

15. The remote UE of claim 12, wherein the RRC message is transmitted as path failure reporting through the indirect path when a path where the radio link failure is detected is the direct path, and is transmitted as the path failure reporting through the direct path when the path where the radio link failure is detected is the indirect path.

16. The remote UE of claim 15, wherein the radio link failure detected on the indirect path is a notification due to a sidelink failure or a radio link failure between the relay UE and the base station on the indirect path.

17. The remote UE of claim 12, wherein the controller performs a cell selection or relay selection operation according to an RRC reconfiguration procedure if a radio link failure is detected in both the direct path and the indirect path, and the transmitter transmits an RRC reconfiguration request message to the base station.
